# EUROPEAN PATENT APPLICATION

(11) **EP 1 466 758 A2**
(43) Date of publication of application: **13.10.2004**
(21) Application number: 04462005.2
(22) Date of filing: 09.04.2004
(51) Int. Cl.: B60B 35/00

(54) **Axle assembly in portal arrangement, especially for low floor vehicles**

(30) Priority: 10.04.2003 HU 0300947
(71) Applicant: Raba Futomü Kft., 9027 Györ (HU)
(72) Inventor: Szalai, Gabor, Dipl. Ing., 9081 Györujbarat (HU); Kadocsa, Dezsö, 9026 Györ (HU); Szij, Peter, 9022 Györ (HU); Istok, Albert, 9023 Györ (HU)
(74) Representative: Asboth, Domokos

(57) **Abstract**

An axle assembly in portal arrangement, especially for a driven axle of low floor vehicles has an axle housing with a main drive, portal drives fixed to both sides of the axle housing, wheel end drive assemblies fixed to portal drive houses and carrying vehicle wheel rims, and wheel braking means connected to the wheel end drive assemblies.

The improvement achieved by this invention is that an outlet of each portal drive (104) is connected to the vehicle wheel rims, respectively, by a hollow spindle (112) being rotatably arranged in a gear housing (109) of each wheel end drive assembly (108) by roller bearings (110, 111) with conical rollers in a pre-stressed manner.

## Description

### BACKGROUND OF THE INVENTION

### 1. Field of the Invention

The invention relates to an axle assembly in portal arrangement, especially for a driven axle of low floor vehicles having an axle housing with a main drive, portal drives fixed to both sides of the axle housing, wheel end drive assemblies fixed to portal drive houses and carrying vehicle wheel rims, and wheel braking means connected to the wheel end drive assemblies.

### 2. Description of the Related Art

The driven axle assemblies having so called portal arrangement are quite wide spread since the requirements in connection with up-to-date mass transportation vehicles of the cities can be fulfilled only with busses and trolley busses built on axle assemblies with portal arrangements. The use of these low floor transport vehicles is often made compulsory by the law for the sake of easy entrance, especially by handicapped people. These vehicles have a reinforced roof structure and a low floor all along the vehicle as well as driving units in the back of the vehicle having a longitudinal motor pushed aside. For these portal arrangements, special fixing solutions have been proposed, see e. g. European Patent No. EP 0599293 B.

In the previously known portal arrangement of the conventional axle assemblies, the main drive together with the planetary gearing within the axle housing is pushed aside as far as possible and the rotational motion is led from the differential drive to the portal drives. The portal drives have four toothed gears, wherein the rotational axis of the upper driven gears coincides with the rotational axis of the vehicle rim. Around this rotational axis, the wheel end drive assemblies of the portal drives are arranged having arms of the breaking assemblies fixed by screws on the portal drive houses. The wheel hub with the brake drum and the vehicle rim fixed by screws on it is attached to the flange of the driving hollow spindle by screws, whilst the wheel hub is rotational at two roller bearings, usually.

As a result of the portal arrangement, the wheel end drive assemblies each of which being arranged on opposite ends of the axle housing, respectively, are with a portal distance higher than the main drive within the lower axle housing. Therefore, the inside of the wheel hubs are sealed at the ends of the hollow spindles to avoid escape of the oil filling from the inside of the wheel hubs.

In the well accepted known solutions of the conventional portal drive assemblies the wheel hub is rotationally held on the hollow spindle by two roller bearings with conical rollers to bear the loads borne on the vehicle rims. Along the same rotational axis, two more roller bearings are required for supporting the driving toothed gear to maintain constant rotational speed and torque conditions. The known solutions are quite complex constructions including wheel hub, hollow spindle, break arms, bearing backup nuts, sealing rings and at least three dividing plane along which the constructional parts are connected to each other by robust threaded junctions. In the praxis, it proves to be unfavourable that the development of the conventional axle assemblies is based on the standard one-gear drive assemblies and the driven gears are pivoted by two separate roller bearings as one element of the inner gear systems. Therefore, the conventional solutions cannot solve the urging need for simpler, smaller and more reliable wheel end drive assemblies as it is required by the recent developments of the driven axle assemblies with portal arrangement.

### SUMMARY OF THE INVENTION

The main objective of the present invention is to provide a driven axle assembly with portal arrangement being suitable for the application in modem mass transportation vehicles with low floor which allow the fulfilment of the requirements of the new vehicle constructing principles with a simpler, smaller, lighter and more reliable construction. The production and operation costs shall decrease whilst the duration, load bearing capacity and reliability shall be increased.

The basic idea of this invention is to make the wheel end drive assemblies considerably shorter then earlier and the reaction forces borne on the central hollow spindle shall be taken up by a pre-stressed bearing arrangement.

Hence, according to the invention, an axle assembly in portal arrangement, especially for a driven axle of low floor vehicles has an axle housing with a main drive, portal drives fixed to both sides of the axle housing, wheel end drive assemblies fixed to portal drive houses and carrying vehicle wheel rims, and wheel braking means connected to the wheel end drive assemblies.

The improvement is in that an outlet of each portal drive is connected to the vehicle wheel rims, respectively, by a hollow spindle being rotatably arranged in a gear housing of each wheel end drive assembly by roller bearings with conical rollers in a pre-stressed manner.

Various optional or preferred features are set out in the detailed description forming part of this specification.

Thus, in one exemplified embodiment of this invention, the hollow spindle is formed as a tubular shaft. Further, said outlet of the portal drive can be formed as a driven gear being connected in a torque transmitting manner to a splined outer surface of said hollow spindle at the vicinity of its end being opposite to the vehicle wheel rim.

It is also preferred, according to the invention, that said wheel braking means are connected to the gear housing of the wheel end drive assembly. Therein, the wheel braking means may have a drum brake, and an arm holding a brake shoe of the wheel braking means as well as a second arm pivoting a brake toggle of the wheel braking means can be formed on an outer surface of the gear housing.

A further preferred embodiment is wherein first of the roller bearings rotationally holding the hollow spindle in the gear housing of the wheel end drive assembly is arranged on an end of the hollow spindle being in the vicinity of the vehicle wheel rim, and the second roller bearing is arranged on another end of the hollow spindle being at the portal drive.

It is still another preferred embodiment, wherein an inner ring of said second roller bearing lies against a flange formed on the hollow spindle by the intervention of an adjusting spacer and it is fixed in its axial position by the intervention of the driven toothed gear of the portal drive with a bearing backup nut arranged on the inner end of the hollow spindle.

Especially for greater loads, it is also preferred, when both of the roller bearings rotationally holding the hollow spindle in the gear housing of the wheel end drive assembly are arranged on an end of the hollow spindle being in the vicinity of the vehicle wheel rim, and on another end of the hollow spindle an inner ring of a support bearing is held in place, and an outer ring of the support bearing is fixed in the portal drive house.

A further preferred embodiment is wherein an oil throwing opening is provided in the gear housing of the wheel end drive assembly in the vicinity of the driven toothed gear of the portal drive, and an oil barrier is formed in the gear housing at the penetration of the hollow spindle through said gear housing.

Finally, the embodiment is also preferred wherein a driving kinematical chain of the wheel end drive assembly together with the bearings is formed as a pre-mounted compact unit, wherein the driving kinematical chain and the bearings include, at least, the gear housing of the wheel end drive assembly, the hollow spindle, the first and second roller bearings. and the support bearing, the bearing backup nut, a sealing ring separating an inside of the gear housing from an outworld as well as the driven toothed gear.

### BRIEF DESCRIPTION OF THE DRAWINGS

Embodiments of this invention will now be described by way of example with reference to the accompanying drawings, in which
- ***Fig. 1***: illustrates a conventional axle assembly as known in the prior art partly in a cross sectional view and partly in side elevational view;
- ***Fig. 2***: is a same view as in Fig. 1, however for a preferred embodiment of this invention along a cross section through the rotational axis of the vehicle rim;
- ***Fig. 3***: is a same view as in Fig. 2, however for still another embodiment.

### DETAILED DESCRIPTION OF THE PREFERRED EMBODIMENTS

In the drawing, a wheel end drive assembly is shown; the same assembly is on the other end of the axle of the vehicle as well.

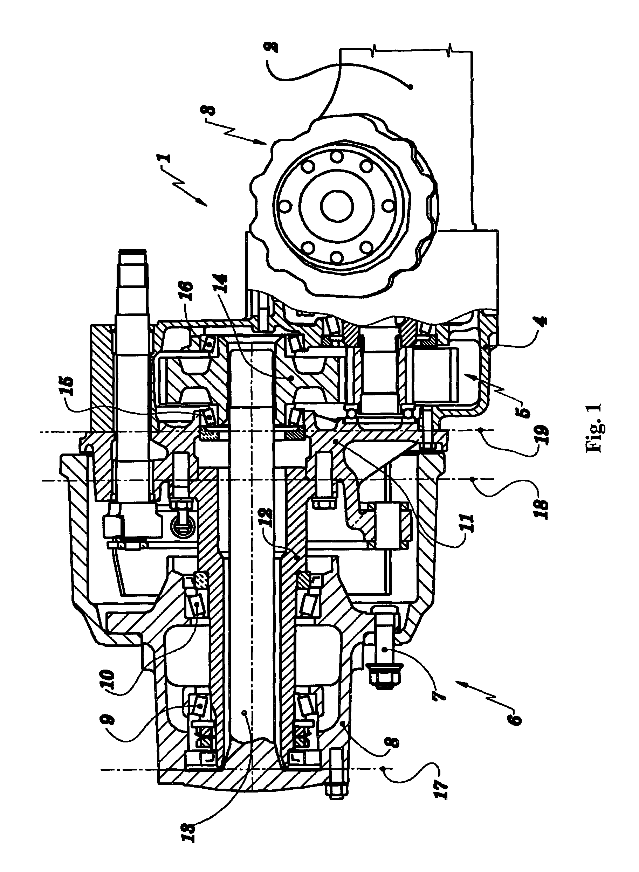

Fig. 1 shows a conventional axle assembly 1 in portal arrangement as is known in the prior art. In an axle housing 2 of the axle assembly 1 is arranged a main drive 3 pushed aside as far as possible, i. e. nearest to the end drive of the axle assembly 1. As mentioned above, a portal drive house 4 is arranged on each end of the axle housing 2, respectively, and the portal drive house 4 contains a portal drive 5 and carries a wheel end drive assembly 6. The drawing shows only one end of the axle assembly 1 having the main drive 3, and the other end of the axle assembly 1 has the same configuration, with exemption of the main drive 3. A vehicle wheel and wheel rim (not shown in the drawing) are fixed at screws 7 on a wheel hub 8 which is rotationally pivoted on a hollow spindle 12 at roller bearings 9 and 10 having conical rollers. The hollow spindle 12 is fixed with screws to an interconnecting piece 11 serving, at the same time, as break holder, and the interconnecting piece 11 is screwed itself to portal drive house 4. Along the same rotational axis, a drive shaft 13 rotating the wheel hub 8 is journaled by two further roller bearings 15 and 16 having conical rollers by the intervention of a driving toothed gear 14 being stationaryly fixed on drive shaft 13. Roller bearings 9, 10, 15 and 16 are held in place by suitable and usual bearing backup nuts, distance holders, and suitable sealings are also provided. As is shown at dotted lines 17, 18, 19, the conventional construction of the axle assembly 1 has three dividing planes.

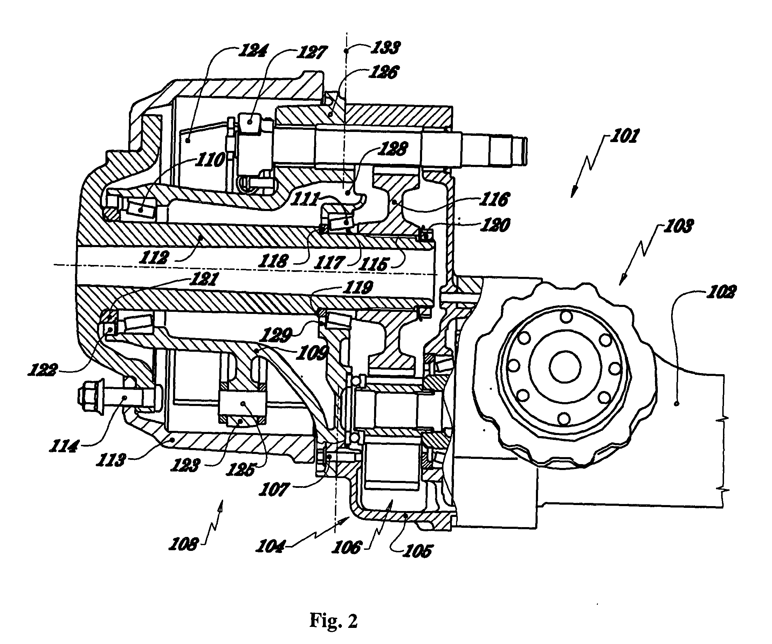

In case of a preferred embodiment of an axle assembly 101 in portal arrangement as in this invention which is shown in Fig. 2 of the drawing, an axle housing 102 of the axle assembly 101 has at its one end a main drive 103 pushed aside as described in connection with Fig.1, and a portal drive assembly 104 and a wheel end drive assembly 108 on both ends of the axle assembly 101, respectively. In a portal drive house 105 of portal drive assembly 104, a conventional portal drive 106 is arranged, and a gear housing 109 of wheel end drive assembly 108 is jointed to portal drive house 105 at screws 107. In this embodiment of the portal axle assembly 101 as proposed in this invention, a rotating spindle 112 is pivoted at roller bearings 110 and 111 with conical rollers within gear housing 109 of wheel end drive assembly 108. On an outer flange of rotating spindle 112 a break drum 113 is fixed (which can be substituted by a brake disc of another embodiment equipped with disc brakes). At the joint of said flange of rotating spindle 112 and break drum 113, screws 114 holding the vehicle rim (not shown) are arranged.

Said rotating spindle 112 is formed, in sense of the invention, as a tubular shaft providing suitable strength at a considerably reduced weight. At an end of the rotating spindle 112 facing the portal drive 106, an outer spline 115 is provided, onto which a driven toothed wheel 116 serving as an outlet of the portal drive 106 is connected in a torque transmitting manner. An inner ring 117 of roller bearing 111 abuts on a flange 119 of rotating spindle 112 with a predetermined distance adjusted by spacer 118, whilst the axial position of the bearing arrangement is determined by a bearing backup nut 120 arranged on the other side of driven toothed wheel 116 abutting on inner ring 117.

At the other end of rotating spindle 112 pointing out of the axle assembly 101, an abut ring 121 is fixed on rotating spindle 112 at the outer side of roller bearing 110, and a sealing 122 separating the inside of gear housing 109 of wheel end drive assembly 108 from an inner space of a break drum 113 runs on said abut ring 121.

The embodiments in this invention provides at the same time for the advantageous arrangement of the wheel braking means of the vehicle under a reduced space demand. This feature of the invention is illustrated in Fig. 2 through an example of a drum brake. A holding arm 123 is formed on gear housing 109 of wheel end drive assembly 108 for inhousing a bolt 125 supporting a brake shoe 124 of the drum brake. At the same time, on an opposite side of gear housing 109, a caste second arm 126 is arranged inhousing a break toggle 127 moving said brake shoe 124 during braking action.

In sake of a suitable lubricating oil supply to the constructional parts within said gear housing 109 of wheel end drive assembly 108, an oil throwing opening 128 is provided in the gear housing 109 of the wheel end drive assembly 108 in the vicinity of the driven toothed gear 116 of the portal drive 104. The lubricating oil gathered at the bottom of portal drive house 105 of portal drive 106 is taken away and thrown up by teething of toothed gear 116 through an oil throwing opening 128 formed in a wall of gear housing 109 into the inside of gear housing 109. The oil niveau within said gear housing 109 is determined with an oil barrier 129 formed on gear housing 109 at roller bearing 111.

In operation of the shown embodiment of portal axle assembly 101 as in this invention, rotational drive received from main drive 103 is forwarded by toothed gear 116 arranged at the outlet side of portal drive 106 to rotating spindle 112 leading the driving torque immediately, without the intervention of any further constructional part to the vehicle rim fixed at screws 114. As is shown, the rotating spindle 112 serving alone for forwarding the rotational drive to the vehicle rim has a pre-stressed bearing arrangement which is suitable and sufficient for taking up the loads and stresses transmitted from the vehicle rim to portal axle assembly 101. The degree of the pre-stress will be adjusted by changing the measurements of spacer 118. Arms 123 and 126 formed on gear housing 109 of wheel end drive assembly 108 provide for a space-sparing arrangement of the wheel braking means.

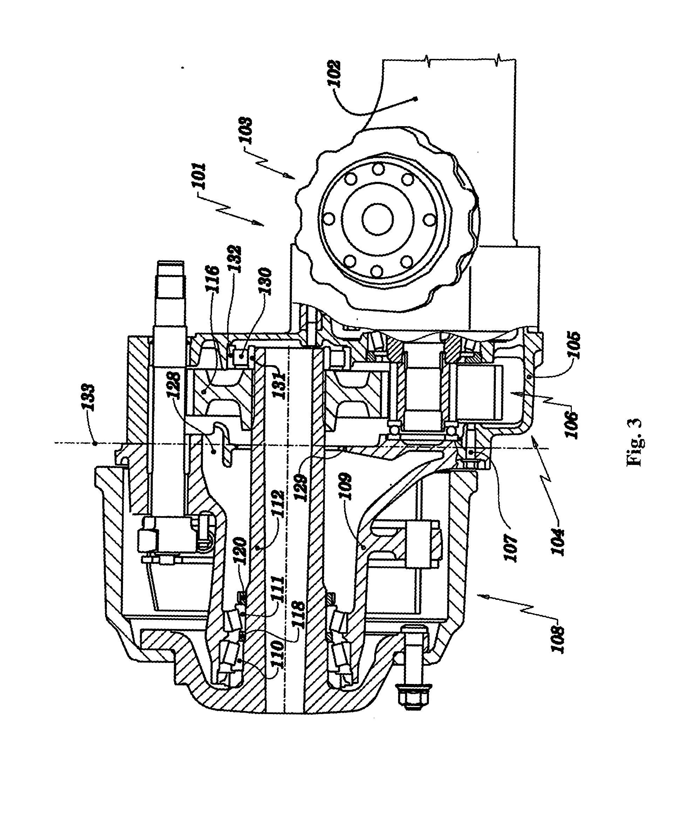

Another preferred embodiment of the portal axle assembly 101 is shown in the partial cross section of Fig. 3. Same parts have identical reference numerals in both figures. The most important constructional difference can be observed by the arrangement of both roller bearings 110 and 111 turned against each other near to each other and the adjusting spacer 118 is between them, whilst bearing backup nut 120 is outside roller bearing 111. In this embodiment, it is preferred to arrange a supporting bearing 130 in the neighbourhood of toothed wheel 116 at the inner end of rotating spindle 112, an inner ring 131 of which is stationaryly pulled onto rotating spindle 112 and an outer ring 132 of which seats in a recess formed here in portal drive house 105 of portal drive assembly 104. This solution enables the wheel end drive assembly 108 to bear higher loads and greater stresses, thus, it can be used with heavy duty vehicles as well. The operation of this embodiment is equal to that of the embodiment as shown in Fig. 2.

The most important advantage of the application of rotating spindle 112 as proposed in this invention is apparent in the possibility of providing a pre-mounted compact unit of the constructional parts connected to the rotating spindle 112. This improvement enables the formation of said compact unit comprising the gear housing 109 of the wheel end drive assembly 108, the hollow spindle 112, the first and second roller bearings 110, 111 on it and, eventually, the support bearing 130, the bearing backup nut 120, the adjusting spacer 118, the sealing ring 122, the driven toothed gear 116 as well as the parts of the wheel brake assembly being arranged here. It is a further advantageous feature of the invention, too, that it has only one dividing plane shown at dotted line 133 in Figs. 2 and 3, and said pre-mounted compact unit is fixed to portal drive house 105 of said portal drive assembly 104 along this dividing plane 133 by screws 107.

As it will be apparent in the comparison of the constructions as shown in Figs. 1 and 2, the wheel end drive assembly 108 as proposed in this invention comprises less parts and is a simple construction, whilst its constructional length is considerably shorter. This is a quite important advantage when the fabrication costs and the operational security and costs are considered. Nevertheless, the pre-mounted compact unit and the single dividing plane at 133 promote the easy montage, maintenance and servicing.

The portal axle assembly 101 of this invention can also be used in existing axles, since the conventional construction can be changed for the new one according to this invention at the dividing plane 133 as an interchangeable unit.

In summary, the portal axle assembly of this invention serves the requirements of mass transportation, the environment and the human, comfort in a beneficial and economical way.

## Claims

1. Axle assembly in portal arrangement, especially for a driven axle of low floor vehicles having an axle housing (2, 102) with
- a main drive (3, 103),
- portal drives (5, 106) fixed to both ends of the axle housing (2, 102),
- wheel end drive assemblies (6, 108) fixed to portal drive houses (4, 105) and carrying vehicle wheel rims, and
- wheel braking means connected to the wheel end drive assemblies (6, 108),
***characterised by that***
an outlet of each portal drive (104) is connected to the vehicle wheel rims, respectively, by a hollow spindle (112) being rotatably arranged in a gear housing (109) of each wheel end drive assembly (108) by roller bearings (110, 111) with conical rollers in a pre-stressed manner.

2. Axle assembly as claimed in Claim 1, ***wherein*** the hollow spindle (112) is formed as a tubular shaft.

3. Axle assembly as claimed in Claim 1 or 2, ***wherein*** said outlet of the portal drive (104) is formed as a driven gear (116) being connected in a torque transmitting manner to a splined outer surface (115) of said hollow spindle (112) at the vicinity of its end being opposite to the vehicle wheel rim.

4. Axle assembly as claimed in any one of Claims 1 to 3, ***wherein*** said wheel braking means are connected to the gear housing (109) of the wheel end drive assembly (108).

5. Axle assembly as claimed in Claim 4, ***wherein*** the wheel braking means has a drum brake, and a first arm (123) holding a brake shoe (124) of the wheel braking means as well as a second arm (126) pivoting a brake toggle (127) of the wheel braking means are formed on an outer surface of the gear housing (109).

6. Axle assembly as claimed in any one of Claims 1 to 5, ***wherein*** first of the roller bearings (110) rotationally holding the hollow spindle (112) in the gear housing (109) of the wheel end drive assembly (108) is arranged on an end of the hollow spindle (112) being in the vicinity of the vehicle wheel rim, and the second roller bearing (111) is arranged on another end of the hollow spindle (112) being at the portal drive (104).

7. Axle assembly as claimed in Claim 6, ***wherein*** an inner ring (117) of said second roller bearing (111) lies against a flange (119) formed on the hollow spindle (112) by the intervention of an adjusting spacer (118) and it is fixed in its axial position by the intervention of the driven toothed gear (116) of the portal drive (104) with a bearing backup nut (120) arranged on the inner end of the hollow spindle (112).

8. Axle assembly as claimed in any one of Claims 1 to 5, *wherein* both of the roller bearings (110, 111) rotationally holding the hollow spindle (112) in the gear housing (109) of the wheel end drive assembly (108) are arranged on an end of the hollow spindle (112) being in the vicinity of the vehicle wheel rim, and on another end of the hollow spindle (112) an inner ring (131) of a support bearing (130) is held in place, and an outer ring (132) of the support bearing (130) is fixed in the portal drive (104) house (105).

9. Axle assembly as claimed in any one of Claims 1 to 8, ***wherein*** an oil throwing opening (128) is provided in the gear housing (109) of the wheel end drive assembly (108) in the vicinity of the driven toothed gear (116) of the portal drive (104), and an oil barrier (129) is formed in the gear housing (109) at the penetration of the hollow spindle (112) through said gear housing (109).

10. Axle assembly as claimed in any one of Claims 1 to 9, ***wherein*** a driving kinematical chain of the wheel end drive assembly (108) together with the bearings is formed as a pre-mounted compact unit, wherein the driving kinematical chain and the bearings include, at least, the gear housing (109) of the wheel end drive assembly (108), the hollow spindle (112), the first and second roller bearings (110, 111) and the support bearing (130), the bearing backup nut (120), a sealing ring (122) separating an inside of the gear housing (109) from an outworld as well as the driven toothed gear (116).
